# EUROPÄISCHE PATENTSCHRIFT

(11) **EP 0 956 992 B1**
(45) Veröffentlichungstag und Bekanntmachung des Hinweises auf die Patenterteilung: **27.08.2003**
(21) Anmeldenummer: 99106289.4
(22) Anmeldetag: 16.04.1999
(51) Int. Cl.: B60K 15/04

(54) **Behälteranordnung für eine Flüssigkeit, insbesondere Kraftstoff-Behälteranordnung für ein Kraftfahrzeug**
Container arrangement for fluid, especially fuel container arrangement in a motor vehicle
Arrangement de réservoir pour fluide, notamment arrangement de réservoir de carburant pour véhicule automobile

(30) Priorität: 12.05.1998 DE 19821119
(43) Veröffentlichungstag der Anmeldung: 17.11.1999
(73) Patentinhaber: Volkswagen Aktiengesellschaft, 38436 Wolfsburg (DE)
(72) Erfinder: Buchmann, Volker, Dipl.-Ing., 38114 Braunschweig (DE); Rischbieter, Frank, Dipl.-Ing., 38165 Lehre (DE)

(56) Entgegenhaltungen:
- EP-A- 0 433 641
- EP-A- 0 714 800
- US-A- 5 687 762

## Beschreibung

Die Erfindung betrifft eine Behälteranordnung gemäß dem Oberbegriff des Patentanspruchs.

Eine gattungsgemäße Behälteranordnung ist in der DE 43 40 418 C1 beschrieben. Dort geht es um eine Kraftstoff-Behälteranordnung für ein Kraftfahrzeug, deren Betanken in dort zwar nicht ausgeführter, aber üblicher Weise mittels einer Zapfpistole erfolgt, die mit einem Abschaltventil bestückt ist. Darunter soll im Rahmen der Erfindung jede Anordnung verstanden sein, die in der Lage ist, bei Auftreten eines vorgegebenen Mindestflüssigkeitsstandes im Füllrohr die weitere Flüssigkeitszufuhr durch die Befülleinrichtung, also hier die Zapfpistole, zu unterbinden. Bei dem zitierten Stand der Technik dient das im Zuge des Füllrohrs angeordnete Absperrventil zur Vermeidung von Leckagen, die durch Alterungserscheinungen einer Dichtung, die am kappenartigen Verschluß des Füllrohrs vorgesehen ist, über längere Betriebszeiten hervorgerufen werden können. Diese Dichtung wird also gleichsam von der eigentlichen Dichtfunktion durch das Absperrventil entlastet. Zur Ansteuerung des Absperrventils, das heißt zum Hervorrufen seiner Absperrwirkung, ist das Ventil in der Weise mit dem Verschluß gekoppelt, daß bei in Schließstellung befindlichem Verschluß das Absperrventil den Strömungsquerschnitt im Füllrohr absperrt, dagegen bei in Öffnungsstellung befindlichem Verschluß diesen Strömungsquerschnitt freigibt.

Ein Nachteil dieser bekannten Behälteranordnung ist darin zu sehen, daß die Beendigung der Kraftstoffzufuhr durch Aktivierung des Abschaltventils der Zapfpistole nicht in direktem Zusammenhang mit dem Erreichen eines vorgegeben Flüssigkeitsspiegels im Behälter erfolgt. Bei Kraftstoffbehältern erfolgt die Unterbrechung bzw. Beendigung der Kraftstoffzufuhr in der Regel dadurch, daß eine Entlüftungseinrichtung des Behälters bei einem vorgegebenen Flüssigkeitsstand gleichsam hydraulisch verschlossen und dadurch ein schnelles Ansteigen des Flüssigkeitsspiegels im Füllrohr hervorgerufen wird.

Wie jedem Autofahrer bekannt, kann diese Methode jedoch - insbesondere bei ungeschickter Handhabung der Zapfpistole - zu einem Herausschießen von Kraftstoff aus dem Füllrohr führen.

Zum Stand der Technik gehört femer eine Vorrichtung zum selbsttätigen Nachfüllen eines Flüssigkeitsbehälters, insbesondere einer Ölwanne eines Kraftfahrzeugmotors (DE 36 19 296 A1). Der eigentliche Behälter ist dabei offenbar dauernd über ein Rohr mit einem Vorratsbehälter verbunden; in dem Rohr befindet sich ein gegebenenfalls elektromagnetisch betätigtes Füllventil, das über einen Sensor so angesteuert wird, daß es bei Vorliegen eines vorgegebenen Mindestwerts des Flüssigkeitsstands im Behälter die weitere Flüssigkeitszufuhr aus dem Vorratsbehälter unterbindet. Um Schwierigkeiten zu vermeiden, wie sie bei dem dort bereits als bekannt angegebenen Einsatz von reinen Flüssigkeitsstandsensoren beispielsweise bei Neigungen des Behälters auftreten, schlägt die Offenlegungsschrift den Einsatz einer Kraftmeßdose im Rahmen des Füllstandsenors vor, die auch von der jeweiligen Temperatur der Flüssigkeit unabhängige Signale für den Flüssigkeitsstand an das Füllventil liefert. Diese bekannte Vorrichtung unterscheidet sich von der erfindungsgemäßen Vorrichtung jedoch bereits gattungsmäßig dadurch, daß eine Befülleinrichtung nach Art einer Zapfpistole mit einem Abschaltventil (im Sinne der oben gegebenen allgemeinen Definition) fehlt, also nicht erkennbar ist, wie an dem Behälter ein echter Betankungsvorgang vorgenommen werden soll.

Der Erfindung liegt die Aufgabe zugrunde, eine gattungsgemäße Behälteranordnung zu schaffen, das heißt eine solche, deren Behälter unter Verwendung einer mit einem Abschaltventil bestückten Befülleinrichtung betankt werden soll, die eine Beendigung der Flüssigkeitszufuhr in direkter Abhängigkeit von dem Erreichen eines vorgegebenen Maximalwerts des Flüssigkeitsstands im Behälter sicherstellt, ohne daß auf Entlüftungseinrichtungen oder dergleichen zurückgegriffen werden muß.

Die erfindungsgemäße Lösung dieser Aufgabe besteht in den kennzeichnenden Merkmalen des Patentanspruchs.

Bei der Erfindung erfolgt also die Unterbrechung der Flüssigkeitszufuhr gleichsam zweistufig, nämlich indem zunächst bei Erreichen des vorgegebenen Maximalwerts des Flüssigkeitsstands im Behälter über einen Flüssigkeitsstandsensor (der auch eine Kraftmeßdose gemäß der Vorrichtung nach der DE 36 19 296 A1 enthalten kann) das Absperrventil im Füllrohr im Sinne des Unterbrechens des Strömungsquerschnitts in diesem angesteuert und dann durch den Flüssigkeitsspiegel im Füllrohr, der infolge der weiteren Lieferung von Flüssigkeit durch die Befülleinrichtung zunächst ansteigt, das Abschaltventil in dieser betätigt und die Flüssigkeitszufuhr unterbrochen wird.

Ein Vorteil der Erfindung ist darin zu sehen, daß die Einrichtungen zum Absperren des Füllrohrs, das heißt Sensor, zugeordnete Steuereinrichtung und Absperrventil, praktisch keinen zusätzlichen Platz erfordern, da zumindest Sensor und Absperrventil innerhalb des Behälters untergebracht sein können.

Ein Ausführungsbeispiel der Erfindung für den bevorzugten Einsatzfall, nämlich eine Kraftstoff-Behälteranordnung für ein Kraftfahrzeug, wird im folgenden anhand der Zeichnung erläutert, deren Figuren schematisch die Behälteranordnung während des Befüllens, bei Erreichen des maximalen Flüssigkeitsstands im Behälter und bei abgeschalteter Befülleinrichtung zeigen.

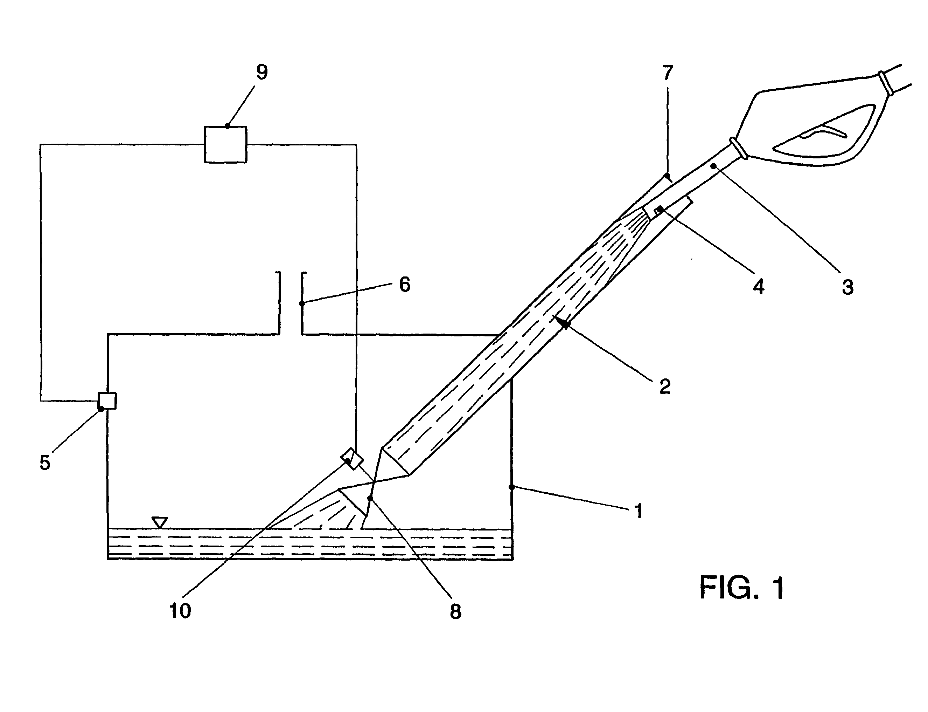

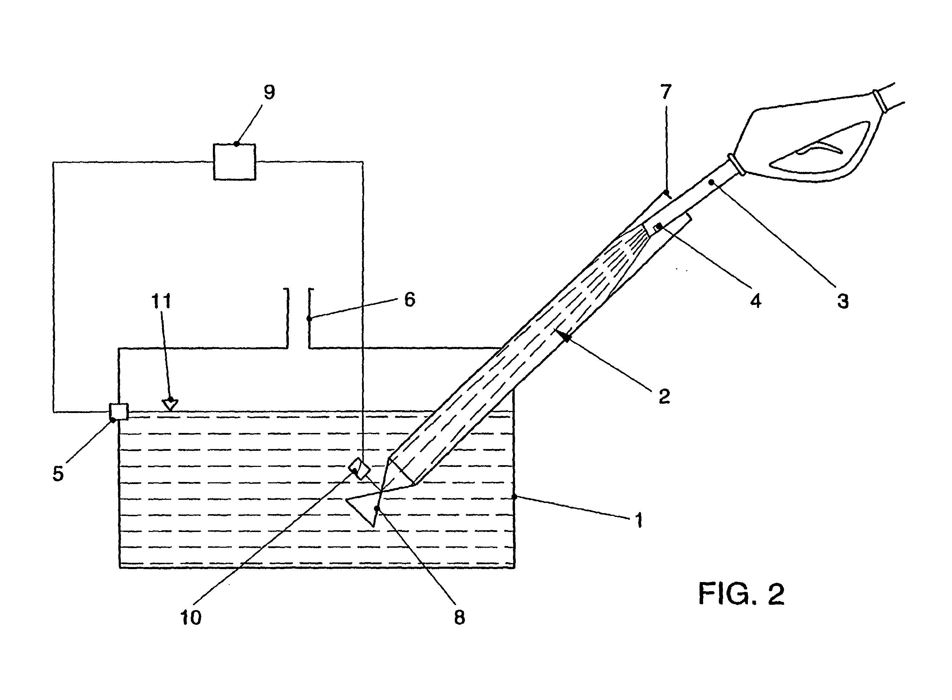

In allen Figuren ist mit 1 der Kraftstoffbehälter, mit 2 das Füllrohr, mit 3 die die Befülleinrichtung darstellende Zapfpistole, mit 4 ein Sensor für ihr Abschaltventil und mit 5 ein Sensor für den vorgegebenen Maximalwert des Flüssigkeitsstands im Behälter 1 bezeichnet. Oberhalb des Flüssigkeitsspiegels im Behälter 1 muß stets ein Mindest-Luftvolumen gewahrt beiben, damit bei allen Fahrzuständen des Fahrzeugs durch die bei 6 angedeutete Entlüftungseinrichtung des Behälters 1 kein Kraftstoff entweicht. An einer von dem äußeren Ende 7 des Füllrohrs 2 entfernten Stelle innerhalb des Behälters 1 ist das Absperrventil 8 für das Füllrohr 2 vorgesehen, das nur während der in Figur 1 behandelten Befüllung des Behälters 1 mit Kraftstoff geöffnet ist, dagegen gemäß Figur 2 durch ein vom Sensor 5 über die Steuereinrichtung 9 erzeugtes Absperrsignal, das der Betätigung 10 zugeführt wird, im Sinne des Unterbrechens des Strömungsquerschnitts des Füllrohrs 2 angesteuert wird. Dadurch ist sichergestellt, daß der vorgegebene maximale Flüssigkeitsstand 11 im Behälter 1 nicht überschritten wird. Wichtig ist, daß bis zum Erreichen des Füllniveaus (Zustand gemäß Figur 2) das Füllrohr 2 einen solchen Strömungsquerschnitt hat, daß sich in ihm der von der Zapfpistole 3 gelieferte Kraftstoff nicht aufstaut.

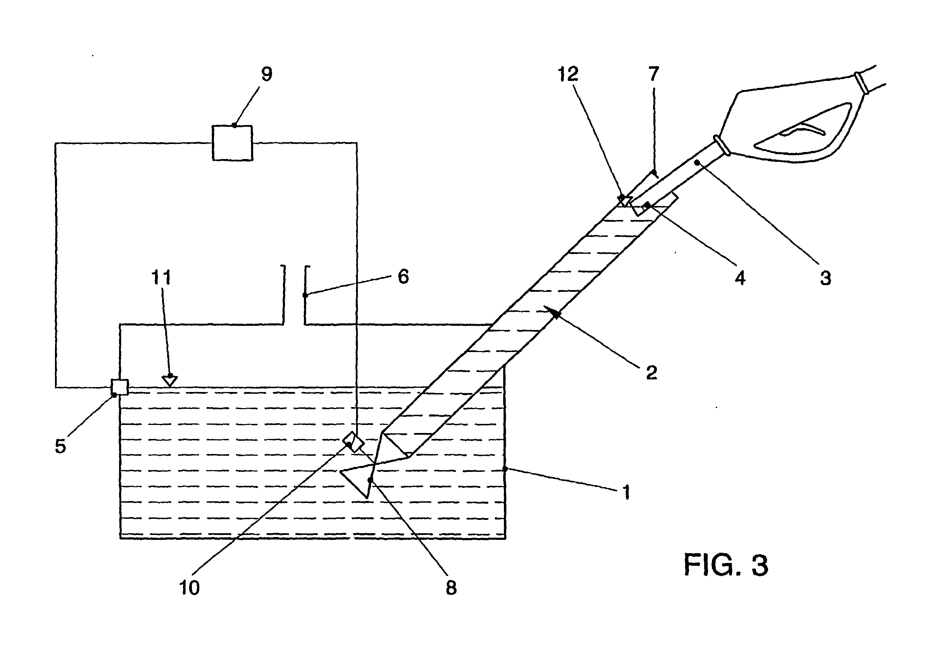

Das geschieht aber nach der in Figur 2 dargestellten Ansteuerung des Absperrventils 8, so daß gemäß Figur 3 der Flüssigkeitspiegel im Füllrohr 2 ansteigt (Nachlieferung von Flüssigkeit durch die Zapfpistole 3), bis der Sensor 4 der Zapfpistole 3 das Erreichen eines vorgegebenen Maximalwerts 12 des Flüssigkeitsstands im Füllrohr 2 signalisiert und ein Abschaltsignal für die weitere Lieferung von Kraftstoff erzeugt.

Nach Herausnehmen der Zapfpistole 3 aus dem oberen Bereich des Füllrohrs 2 wird das obere Rohrende 7 mittels einer nicht dargestellten, da in vielen Ausführungen bekannten Verschlußkappe dichtend abgedeckt, so daß der im Füllrohr 2 befindliche Kraftstoff nicht ins Freie gelangen kann. Es ist auch denkbar, das Absperrventil 8 so auszulegen bzw. ein zusätzliches Ventil solcher Auslegung vorzusehen, daß bei Absinken des Flüssigkeitsspiegels im Behälter 1 unter die Höhe des unteren Rohrendes des Füllrohrs 2 die in diesem befindliche Kraftstoffmenge in den Behälter 1 abströmen kann.

Mit der Erfindung ist demgemäß eine gattungsgemäße Behälteranordnung geschaffen, die auf einfachste Weise unter Verwendung an sich bekannter und bewährter Bauelemente ohne Rückgriff auf andere Teile der Anordnung, beispielsweise die Entlüftungseinrichtung, eine exakte Abschaltung der Flüssigkeitszufuhr bei Erreichen eines vorgegebenen Maximalwerts des Flüssigkeitsstands in dem Behälter sicherstellt.

## Patentansprüche

1. Behälteranordnung für eine Flüssigkeit, insbesondere Kraftstoff-Behälteranordnung für ein Kraftfahrzeug, mit einem Behälter (1) und einem in diesen mündenden Füllrohr (2), das zum Einführen einer mit einem Abschaltventil (4) bestückten Befülleinrichtung, insbesondere einer Zapfpistole (3), von seinem dem Behälter abgekehrten äußeren Ende her eingerichtet ist, und das an einer von diesem äußeren Ende entfernten Stelle mit einem angesteuerten Absperrventil (8) versehen ist und dessen äußerem Ende ein Verschluß zugeordnet ist, **dadurch gekennzeichnet, daß** ein einen vorgegebenen Maximalwert (11) des Flüssigkeitsstands im Behälter (1) zur Erzeugung eines Absperrsignals für das Absperrventil (8) erfassender Sensor (5) vorgesehen ist, so daß bei angesteuertem Absperrventil (8) der Flüssigkeitsstand in dem zumindest bereichsweise annähernd senkrecht verlaufenden Füllrohr (2) bis zum Ansprechen des Abschaltventils (4) steigt.

## Claims

1. Tank arrangement for a liquid, in particular fuel tank arrangement for a motor vehicle, with a tank (1) and with a filling pipe (2) which issues into the latter and is designed for the introduction of a filling device equipped with a cut-off valve (4), in particular of a fuel-pump nozzle (3), from its outer end facing away from the tank, and which is provided, at a point remote from this outer end, with an activated shut-off valve (8) and the outer end of which is assigned a cap,
**characterized in that** a sensor (5) detecting a predetermined maximum value (11) of the liquid level in the tank (1) in order to generate a shut-off signal for the shut-off valve (8) is provided, so that, with the shut-off valve (8) activated, the liquid level in the filling pipe (2) running, at least in regions, approximately vertically rises until the cut-off valve (4) responds.

## Revendications

1. Arrangement de réservoir pour un fluide, notamment arrangement de réservoir de carburant pour un véhicule automobile, comprenant un réservoir (1) et un tube de remplissage (2) débouchant dans celui-ci, lequel est prévu pour l'introduction d'un dispositif de remplissage équipé d'une soupape de coupure (4), en particulier d'un pistolet de pompe (3), par son extrémité extérieure opposée au réservoir, et qui est pourvu, à un emplacement éloigné de cette extrémité extérieure, d'une soupape d'arrêt (8) commandée, et à l'autre extrémité duquel est associée une fermeture, **caractérisé en ce qu'**il est prévu un capteur (5) détectant une valeur maximale prédéfinie (11) du niveau de fluide dans le réservoir (1) destiné à produire un signal d'arrêt pour la soupape d'arrêt (8), de sorte que lorsque la soupape d'arrêt (8) est commandée, le niveau de liquide monte dans le tube de remplissage (2) s'étendant au moins partiellement approximativement verticalement, jusqu'à la réaction de la soupape de coupure (4).
